(19) **Europäisches Patentamt / European Patent Office / Office européen des brevets**

(11) **EP 3 249 840 B1**

(12) **EUROPEAN PATENT SPECIFICATION**

(45) Date of publication and mention
of the grant of the patent:
**04.12.2019 Bulletin 2019/49**

(21) Application number: **15878888.5**

(22) Date of filing: **27.10.2015**

(51) Int Cl.:
*H04L 1/18* (2006.01)   *H04M 11/00* (2006.01)
*H04Q 9/00* (2006.01)   *H04W 28/18* (2009.01)

(86) International application number:
**PCT/JP2015/080163**

(87) International publication number:
**WO 2016/117199 (28.07.2016 Gazette 2016/30)**

(54) **WIRELESS COMMUNICATION DEVICE, AND INFORMATION PROCESSING METHOD AND PROGRAM**

DRAHTLOSKOMMUNIKATIONSVORRICHTUNG SOWIE INFORMATIONSVERARBEITUNGSVERFAHREN UND PROGRAMM

DISPOSITIF DE COMMUNICATION SANS FIL, ET PROCÉDÉ ET PROGRAMME DE TRAITEMENT D'INFORMATIONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **20.01.2015 JP 2015008507**

(43) Date of publication of application:
**29.11.2017 Bulletin 2017/48**

(73) Proprietor: **Sony Corporation**
**Tokyo 108-0075 (JP)**

(72) Inventors:
• **SATO, Masanori**
**Tokyo 108-0075 (JP)**

• **ITOH, Katsutoshi**
**Tokyo 108-0075 (JP)**

(74) Representative: **Witte, Weller & Partner**
**Patentanwälte mbB**
**Postfach 10 54 62**
**70047 Stuttgart (DE)**

(56) References cited:
**EP-A1- 2 640 117        JP-A- 2004 178 068**
**JP-A- 2004 260 634     JP-A- 2014 233 012**
**US-A1- 2011 099 446**

**Description**

TECHNICAL FIELD

The present technology relates to a wireless communication device. More specifically, the present technology relates to a wireless communication device and an information processing method for handling information concerning wireless communication, and a program under which a computer executes this information processing method.

BACKGROUND ART

There have been wireless communication technologies for exchanging various types of data by use of wireless communication. For example, there has been proposed a wireless transmitter which determines a transmission frequency, and intermittently and wirelessly transmits transmission data (for example, see Patent Document 1).

CITATION LIST

PATENT DOCUMENT

Patent Document 1: Japanese Patent Application Laid-Open No. 2011-188338

US 2011/099446 A1 discloses that transmitter inserts error detection codes into information packets on one-to-one basis, at a certain layer at which signal processing is performed earlier than at a physical layer, to obtain first information packets. The transmitter codes the first information packets at the physical layer to obtain second information packets, and transmits the second information packets. At the certain layer, the transmitter generates parity packets by coding the information packets and inserts the error detection codes into the parity packets on one-to-one basis to obtain first parity packets. The transmitter codes the first parity packets at the physical layer to obtain second parity packets . The transmitter transmits the second parity packets in accordance with a transmission request from each of one or more receivers.

EP 2640117 A1 discloses that a base station communicates with a mobile station continuously transmitting a predetermined number of the same packets for predetermined time intervals. The base station includes a measuring unit and a control unit. The measuring unit measures reception quality of packets received from the mobile station out of the predetermined number of the same continuous packets. The control unit performs control of causing the mobile station to set the predetermined number based on the reception quality measured by the measuring unit, thereby improving communication efficiency.

Further prior art can be found in JP 2004-260634 A, JP 2014-233012 A and JP 2004-178068.

SUMMARY OF THE INVENTION

PROBLEMS TO BE SOLVED BY THE INVENTION

According to this conventional technology, data communication between a plurality of devices is realizable through intermittent wireless transmission of transmission data.

Suppose herein that data communication is performed between devices having different reception functions by use of wireless communication, for example. In this case, the device not provided with a particular reception function has a relatively short communication distance. It is important, however, that each of the devices should perform appropriate data communication through wireless communication even in a case where the devices have different reception functions.

The present technology has been developed in consideration of the aforementioned circumstances. It is an object of the present technology to realize appropriate data communication.

SOLUTIONS TO PROBLEMS

The present technology has been developed to solve the aforementioned problems. The present technology is directed to a wireless communication device, an information processing method for this device, and a program under which a computer executes this method as defined in the independent claims.

In addition, the control unit may determine the number of times of transmission on the basis of a result of comparison between the reception power and a threshold. With this arrangement, the number of times of transmission is determined on the basis of a result of comparison between the reception power of the reference signal and the threshold.

In addition, in a case where the reception power is high with respect to the threshold, the control unit may set the number of times of transmission to a value smaller than the number of times of transmission set in a case where the reception power is low with respect to the threshold. With this arrangement, the number of times of transmission set in a case where the reception power of the reference signal is high with respect to the threshold becomes a value smaller than the number of times of transmission set in a case where the reception power of the reference signal is low with respect to the threshold.

In addition, in a case where the reception power is low with respect to the threshold, or in a case where detection of the reference signal is difficult, the control unit may determine a maximum in a plurality of numbers of times of transmission set beforehand, or an approximate value of the maximum. With this arrangement, the maximum in the plurality of numbers of times of transmission set beforehand, or the approximate value of this maximum is determined in a case where the reception power of the reference signal is low with respect to the threshold, or in a case where detection of the reference signal is difficult.

In addition, the control unit may determine the number of times of transmission on the basis of a transmission system for transmitting the data and the reception power. With this arrangement, the number of times of transmission is determined on the basis of the transmission system for transmitting the data, and on the reception power of the reference signal.

In addition, the control unit determines a transmission interval of the transmission data on the basis of the determined number of times of transmission. With this arrangement, the transmission interval is determined on the basis of the determined number of times of transmission.

In addition, the control unit may determine the transmission interval on the basis of a result of comparison between a threshold and the determined number of times of transmission. With this arrangement, the transmission interval is determined on the basis of the result of comparison between the threshold and the determined number of times of transmission.

In addition, in a case where the determined number of times of transmission is large with respect to the threshold, the control unit may set the transmission interval to a value larger than the transmission interval set in a case where the determined number of times of transmission is small with respect to the threshold. With this arrangement, the transmission interval set in a case where the determined number of times of transmission is large with respect to the threshold becomes a value larger than the transmission interval set in a case where the determined number of times of transmission is small with respect to the threshold.

In addition, the control unit may set the transmission interval to an integral multiple of a frame length of the data. With this arrangement, the transmission interval is set to an integral multiple of the frame length of the data.

## EFFECTS OF THE INVENTION

According to the present technology, an excellent effect of appropriate data communication is offerable. Note that advantages to be offered are not limited to these advantages, but may be any of advantages described in the present disclosure.

## BRIEF DESCRIPTION OF DRAWINGS

Fig. 1 is a diagram showing a system configuration example of a communication system 10 according to an embodiment of the present technology.
Fig. 2 is a block diagram showing a functional configuration example of a wireless communication device 100 according to the embodiment of the present technology.
Fig. 3 is a diagram showing a configuration example of a frame format of a signal transmitted from each of the wireless communication device 100, wireless communication devices 101 and 102, and base stations 201 and 202.
Fig. 4 is a diagram showing determination examples of a number of times of transmission (number of times of retransmission) of data in a case where the wireless communication devices 100 through 102 transmit data to the base stations 201 and 202.
Fig. 5 is a diagram showing determination examples of a transmission interval of data in a case where the wireless communication devices 100 through 102 transmit data to the base stations 201 and 202.
Fig. 6 is a diagram showing setting examples of the transmission interval of data in a case where the wireless communication devices 100 through 102 transmit data to the base stations 201 and 202.
Fig. 7 is a flowchart showing an example of processing procedures of a transmission process performed by the wireless communication device 100 according to the embodiment of the present technology.
Fig. 8 is a flowchart showing a number of times of transmission determination process in the processing procedures of the transmission process performed by the wireless communication device 100 according to the embodiment of the present technology.

Fig. 9 is a flowchart showing a transmission interval determination process in the processing procedures of the transmission process performed by the wireless communication device 100 according to the embodiment of the present technology.

Fig. 10 is a block diagram showing an example of a general configuration of a smartphone.

Fig. 11 is a block diagram showing an example of a general configuration of a car navigation device.

Fig. 12 is a block diagram showing an example of a general configuration of a wireless access point.

MODES FOR CARRYING OUT THE INVENTION

Modes for carrying out the present technology (hereinafter referred to as embodiments) are described hereinbelow. The description is presented in the following order.

1. Embodiment (example determining number of times of transmission of transmission data on the basis of reception power of reference signal, and determining transmission interval of transmission data on the basis of determined number of times of transmission)
2. Application Example

<1. Embodiment>

[Configuration Example of Communication System]

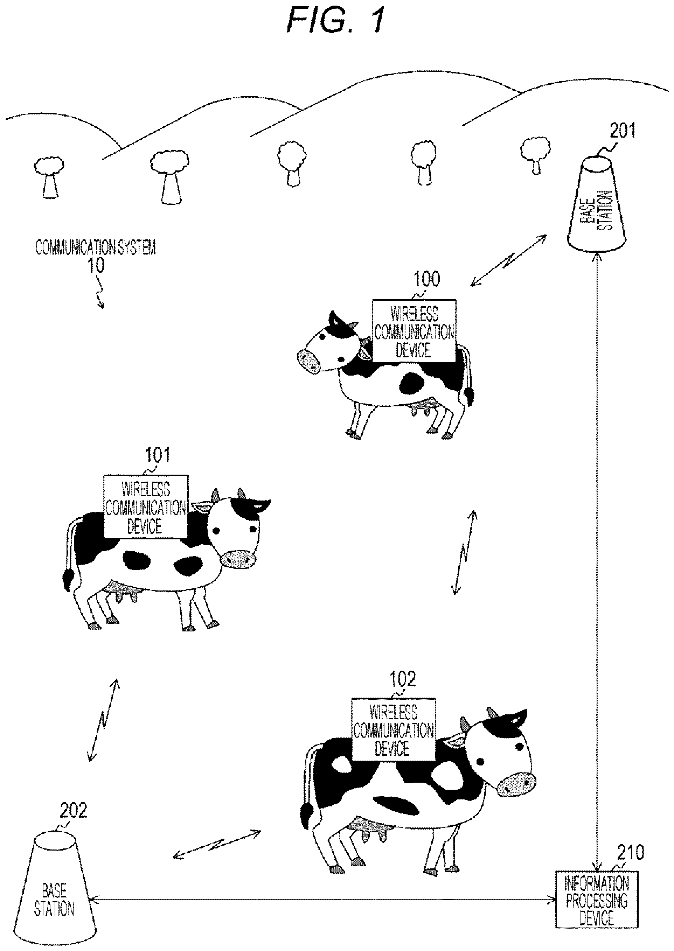

Fig. 1 is a view illustrating a system configuration example of a communication system 10 according to an embodiment of the present technology. More specifically, Fig. 1 shows a configuration example of respective devices constituting a wireless sensor network.

The communication system 10 includes wireless communication devices 100 through 102, base stations 201 and 202, and an information processing device 210.

Fig. 1 illustrates an example of grazing cows to each of which the corresponding one of the wireless communication devices 100 through 102 is attached. The cows are managed on the basis of information transmitted from each of the wireless communication devices 100 through 102 attached to the corresponding cows in the manner shown in the figure.

For example, the information processing device 210 receives information acquired by the wireless communication devices 100 through 102 via the base stations 201 and 202, and manages the cows on the basis of the received information. Note that the information processing device 210 is constituted by a server, a personal computer, a tablet-type terminal, a smartphone or other information processing devices, for example.

Note that, while the example shown in Fig. 1 is an example of wireless communication devices each of which is attached to one corresponding cow for convenience of description, a set of two or more of the wireless communication devices may be similarly attached to each cow.

For example, a sensor device (potential hydrogen or power of hydrogen (pH) measuring instrument) for measuring pH may be attached to a stomach of each cow as a wireless communication device. Alternatively, for example, a sensor device (cow thermometer) capable of measuring a temperature of a cow may be attached to a cow as a wireless communication device. Information acquired by each of these sensor devices may be transmitted to an information processing device (such as server) via the base stations by utilizing wireless communication. In this case, the frequency band may be set to 920 MHz band, for example.

In addition, each of the wireless communication devices 100 through 102 may be a portable or stationary information processing device or electronic device having a wireless communication function, for example. Note that the portable information processing device (electronic device) is a smartphone, a cellular phone, or a tablet terminal, for example, and that the stationary information processing device (electronic device) is a printer or a personal computer, for example.

In addition, each of the wireless communication devices 100 through 102 may be constituted by a low power consumption type electronic device. The low power consumption type electronic device may be constituted by Bluetooth (registered trademark) Low Energy (BLE) which transmits sensor data (such as pulse, body temperature, and position), for example. In addition, the electronic device may be a device attachable to a human or an animal. For example, the electronic device may detect a sharp change of a human or an animal to which the electronic device is attached, and detect a drop of the human or the animal, heart attack or the like of the human or the animal on the basis of the change. The information thus detected is transmitted to the information processing device 210 regularly or at the time of detection via the base stations 201 and 202. For example, emergency notification (such as information associated with life of human or animal (like information for giving notice of heart attack, information for giving notice of drop)) is transmitted to the information processing device 210 via the base stations 201 and 202 at the time of detection.

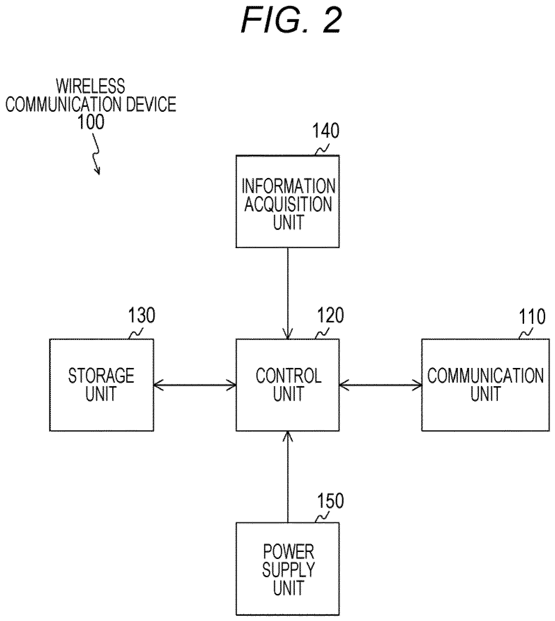

Note that a configuration example of the wireless communication devices 100 through 102 will be detailed with reference to Fig. 2.

Note that, while Fig. 1 shows an example of the communication system 10 including the two base stations 201 and 202, the embodiment of the present technology is applicable to a communication system including one, three or more base stations. In addition, while Fig. 1 shows the example of the communication system 10 including the three wireless communication devices 100 through 102, the embodiment of the present technology is applicable to a communication system including one, two, four or more wireless communication devices.

In addition, the communication system 10 may recognize the wireless communication devices 100 through 102 as transmitters, and the base stations 201 and 202 as receivers. Alternatively, the communication system 10 may recognize the wireless communication devices 100 through 102 as receivers, and the base stations 201 and 202 as transmitters.

For construction of a low-cost wireless sensor network, it is important to increase a communication distance between a wireless communication device and a base station. For example, a range coverable by a small number of base stations expands when a communication distance between a wireless communication device and each base station is long. With this arrangement, cost reduction of the entire communication system is achievable.

It is assumed, however, that the communication distance of the wireless sensor network is difficult to increase.

The communication distance increases with a rise of transmission power, for example. However, a rise of transmission power increases power consumption. For example, a long-period and limited-battery operation has been demanded for a wireless communication device, in which situation power consumption may be difficult to increase.

The communication distance may increase with a plurality of times of transmission of identical data, as well as a rise of transmission power. For example, an S/N ratio (signal to noise ratio (SNR)) may be raised by transmitting identical data a plurality of times, and synthesizing reception signals on the reception side. With this arrangement, the communication distance is allowed to increase.

There exists a plurality of transmission methods for realizing transmission a plurality of times. For example, adoptable is a method which transmits completely identical data (chase combine (CC) system), or a method which transmits data a plurality of times while changing combinations of redundant bits produced by error correction (incremental redundancy (IR) system).

As apparent from above, the number of times of transmission is important for performing transmission a plurality of times. For example, the communication distance increases with a rise of the number of times of transmission. In case of multi-access realizing transmission from a plurality of wireless communication devices to an identical base station, however, transmission interference between the wireless communication devices increases as the number of times of transmission from each of the wireless communication devices rises. In this case, communication is difficult to achieve in the presence of transmission interference. Accordingly, it is preferable that the number of times of transmission is the smallest possible number.

For example, a technology called hybrid automatic repeat request (ARQ), i.e., HARQ, is adoptable in the foregoing circumstances. Note that HARQ is a technology adopted under high speed downlink packet access (HSDPA), long term evolution (LTE), or other public network standards.

According to HARQ, a wireless communication device receives an acknowledgement (ACK) and a negative acknowledgement (NACK) transmitted from a base station for every transmission. The wireless communication device determines whether to perform next repeated transmission on the basis of this reception. With this arrangement, it is expected that the number of times of transmission is allowed to converge at the optimum number of times of transmission.

However, the wireless communication device is required to have an ACK reception function in a case where HARQ is adopted in the wireless sensor network. For example, a process for decoding a message of an ACK is needed as well as packet detection for reception of the ACK. In addition, the wireless communication device is required to perform a high-level signal processing for receiving an ACK in a case where the distance between the wireless communication device and the base station is long. The reception function thus performed increases power consumption of the wireless communication device. In this case, the operable period of the wireless communication device may be difficult to elongate.

For overcoming these problems, presented according to an embodiment of the present technology is an example which appropriately determines the number of times of transmission performed by a wireless communication device which does not have an ACK reception function for the purpose of increasing a communication distance.

In addition, a use period of wireless resources increases in a case where the number of times of transmission rises. Moreover, an occupancy period of the wireless resources increases with a rise of the number of times of transmission if transmission intervals are short. This condition may lower efficiency of multi-access transmission.

On the other hand, a use period of wireless resources decreases in a case where the number of times of transmission reduces. In this case, an occupancy period of the wireless resources decreases even when transmission intervals are short. Efficiency of multi-access transmission improves in this condition.

Accordingly, presented in the embodiment of the present technology is an example which appropriately determines transmission intervals in accordance with the number of times of transmission performed by the wireless communication device 100 in case of transmission of a plurality of times.

[Configuration Example of Wireless Communication Device]

Fig. 2 is a block diagram showing a functional configuration example of the wireless communication device 100 according to the embodiment of the present technology. Note that each of functional configurations of the wireless communication devices 101 and 102 and the base stations 201 and 202 (functional configurations relating to wireless communication) is substantially identical to the functional configuration of the wireless communication device 100. Accordingly, only the wireless communication device 100 is touched upon, while description of the other devices is omitted.

The wireless communication device 100 includes a communication unit 110, a control unit 120, a storage unit 130, an information acquisition unit 140, and a power supply unit 150.

The communication unit 110 is a module (such as wireless local area network (LAN) modem) for transmitting and receiving radio waves via an antenna (not shown) . For example, the communication unit 110 performs transmission and reception processes under control by the control unit 120. For example, the communication unit 110 transmits and receives wireless signals in a predetermined frame format.

For example, the communication unit 110 may perform wireless communication by using a communication system in conformity with institute of electrical and electronics engineers (IEEE) 802.11, IEEE 802.15, and IEEE 802.16. In addition, for example, the communication unit 110 may perform wireless communication by using a communication system in conformity with 3rd generation partnership project (3GPP) specifications. Note that examples of 3GPP specifications include wideband code division multiple access (W-CDMA), global system for mobile communications (GSM (registered trademark), worldwide interoperability for microwave access (WiMAX), WiMAX2, long term evolution (LTE), and LTE-advanced (LET-A).

In addition, for example, the communication unit 110 may perform wireless communication by using a communication system in conformity with other public networks (cellular phone networks), Bluetooth (registered trademark), ZigBee (registered trademark), BLE, and ANT (protocol of super-low power consumption type short-range network in 2.4 GHz band) .

In addition, the communication unit 110 may exchange various types of information by using a wireless communication function. For example, the communication unit 110 may perform wireless communication with other devices by using a wireless LAN. This wireless LAN may be wireless fidelity (Wi-Fi) direct, tunneled direct link setup (TDLS), an ad hoc network, and a mesh network, for example.

The control unit 120 is configured to control respective units of the wireless communication device 100 under control programs stored in the storage unit 130. The control unit 120 is realized by a central processing unit (CPU). In addition, for example, the control unit 120 performs signal processing for information transmitted or received. For example, the control unit 120 generates transmission frames, or makes determinations based on received information. In addition, for example, the control unit 120 may measure and use reception power of signals received by the communication unit 110. Note that reception power is information indicating intensity of received signals, and also is recognizable as a reception signal intensity level.

In addition, for example, the control unit 120 determines the number of times of transmission that transmission target data is repeatedly transmitted to a different device (such as base stations 201, 202) on the basis of reception power of a reference signal transmitted from the different device. For example, the control unit 120 further determines transmission intervals of transmission data on the basis of the determined number of transmission.

The storage unit 130 is a memory for storing various types of information. For example, the storage unit 130 stores various types of information necessary for performing desired operations by the wireless communication device 100 (such as control programs).

The information acquisition unit 140 is an acquisition unit (such as sensor) which acquires various types of information, and outputs acquired information to the control unit 120. In addition, the control unit 120 transmits information acquired by the information acquisition unit 140 to other devices by utilizing wireless communication. The information acquisition unit 140 is realized by a pH meter, a cow thermometer, or a positional information acquisition device (such as GPS module), for example.

The power supply unit 150 is configured to supply power to respective units of the wireless communication device 100 under control by the control unit 120. For example, the power supply unit 150 is constituted by a battery contained in the wireless communication device 100, or a battery attachable to the wireless communication device 100. In addition, the control unit 120 has a function for estimating a battery residual quantity to acquire an estimated battery residual quantity as necessary.

[Configuration Example of Frame Format]

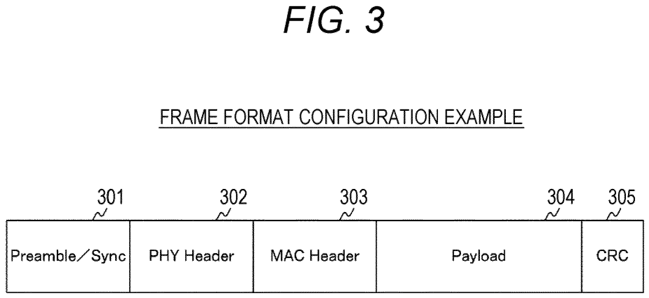

Fig. 3 is a diagram showing a configuration example of a frame format of signals transmitted from the wireless communication devices 100 through 102 and the base stations 201 and 202 according to the embodiment of the present technology. Fig. 3 shows a configuration example of a data frame in a case where the communication system is a wireless LAN.

For example, the frame format is constituted by a preamble/sync 301, a physical layer (PHY) header 302, a media access control (MAC) header 303, a payload 304, and a cyclic redundancy check (CRC) 305.

The preamble/sync 301 is a fixed pattern determined beforehand. In addition, for example, the preamble/sync 301 is used for detection of signals and synchronization of frames in a receiver. For example, the preamble/sync 301 is a known pattern used by the receiver for detecting wireless signals. For example, the receiver may detect the presence or absence of wireless signals by calculating correlation between the known pattern and received signals.

The PHY header 302 is a section for storing information relating to a physical frame. The information relating to a physical frame indicates information such as a length of a part after the PHY header 302 (MAC header 303, payload 304, and CRC 305), and a modulation system. In this case, the receiver may receive the part after the PHY header 302 on the basis of information stored in the PHY header 302.

The MAC header 303 is a part for storing address information indicating each address of a transmitter and the receiver. The address information corresponds to a unique ID of the corresponding device (such as terminal ID), for example, and may be identical to a MAC address, for example. Alternatively, other terminal identification information may be adopted. In addition, the MAC header 303 stores types of information to be stored in the payload 304, for example.

The payload 304 is transmission data. In a case where the transmitter is a sensor device, for example, information acquired by the sensor device (sensor information) is stored in the payload 304.

The CRC 305 stores information for detecting frame errors. The receiver may detect frame errors on the basis of the information stored in the CRC 305.

It is assumed herein that each of the base stations 201 and 202 cyclically transmits reference signals. The reference signals may have the frame format shown in Fig. 3, for example. In this case, only the preamble/sync 301 included in the frame format shown in Fig. 3 may be transmitted as the reference signals, or other information may be transmitted as the reference signals.

[Determination Example of Number of Times of Transmission]

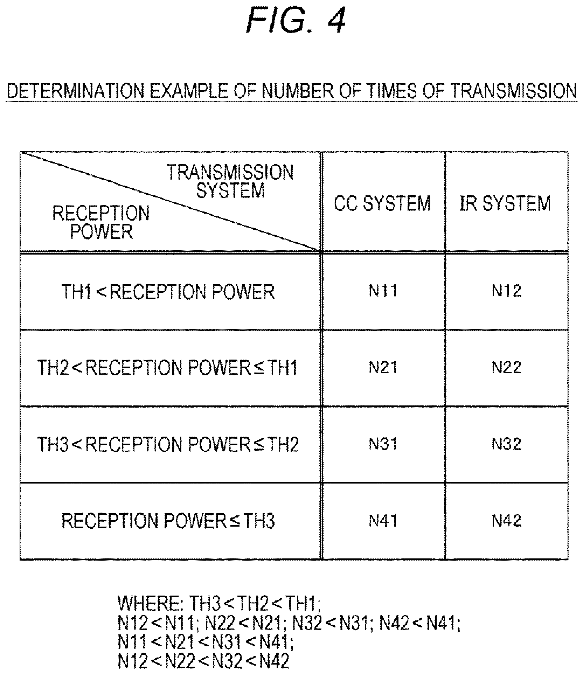

Fig. 4 is a diagram showing determination examples of the number of times of transmission (number of times of re-transmission) in a case where the wireless communication devices 100 through 102 transmit data to the base stations 201 and 202 according to the embodiment of the present technology.

Presented according to the embodiment of the present technology is an example which determines the number of times of transmission (number of times of re-transmission) of data on the basis of reception power and transmission system (re-transmission system) of a reference signal as shown in Fig. 4.

It is assumed herein that thresholds TH1, TH2, and TH3 compared with the reception power of the reference signal have a relationship of TH1 > TH2 > TH3.

In addition, in general, for the transmission system, a synthetic gain obtained by the IR system on the reception side is larger than a synthetic gain obtained by the CC system. It is therefore assumed that numbers of times of transmission N11 and N12 have a relationship N11 > N12. It is also assumed that numbers of times of transmission N21 and N22 have a relationship N21 > N22. It is also assumed that numbers of times of transmission N31 and N32 have a relationship N31 > N32. It is also assumed that numbers of times of transmission N41 and N42 have a relationship N41 > N42.

It is further assumed that the respective numbers of times of transmission have relationships N11 < N21 < N31 < N41, and N12 < N22 < N32 < N42.

The respective numbers of times of transmission N11, N12, N21, N22, N31, N32, N41, and N42 are herein set to simple numerical example values for simplifying the description. For example, the respective numbers of times of transmission may be determined as N11 = 5, N12 = 3, N21 = 10, N22 = 6, N31 = 15, N32 = 9, N41 = 20, N42 = 12.

In addition, a relationship between the threshold TH1 and the numbers of times of transmission N11 and N12 may be determined on the basis of the minimum N meeting following inequality of Expression 1.

$$F(N) \geq Rx\_REQ - (TxP\_STA/TxP\_AP)TH \quad \cdots \text{Expression 1}$$

In this expression, F(N) indicates a gain obtained by synthesis. In addition, N indicates the number of times of transmission, such as N11 and N12.

In addition, Rx_REQ indicates reception power necessary for demodulation of a transmission signal by a receiver. In addition, TxP_STA indicates transmission power of a wireless communication device. In addition, TxP_AP indicates transmission power of a base station.

In addition, TH indicates a threshold, such as TH1 and TH2.

As apparent from above, the minimum number of times of transmission N meeting Expression 1 may be decreased as the threshold TH increases. In other words, the number of times of transmission may be decreased in a case where the reception power of the reference signal increases.

In addition, the numbers of times of transmission N41 and N42 may be set to values determined in a case where the wireless communication device 100 does not detect a reference signal. More specifically, in a case where the reception power of the reference signal is the threshold TH3 or lower, the number of times of transmission may be set to a value determined in a case where the wireless communication device 100 does not detect a reference signal.

[Determination Example of Transmission Intervals]

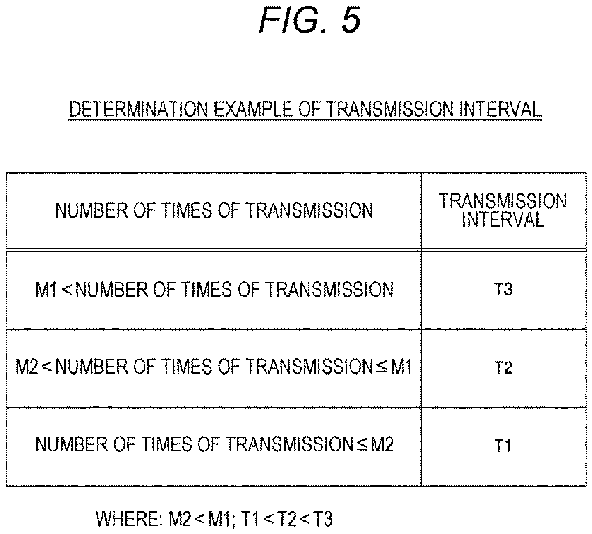

Fig. 5 is a view showing determination examples of transmission intervals of data in a case where the wireless communication devices 100 through 102 transmit data to the base stations 201 and 202 according to the embodiment of the present technology.

As illustrated in Fig. 5, presented in the embodiment of the present technology is an example which determines transmission intervals of data on the basis of the number of times of transmission (number of times of re-transmission).

It is assumed herein that thresholds M1 and M2 compared with the number of times of transmission have a relationship M1 > M2. It is also assumed that transmission intervals T1 through T3 have a relationship T1 < T2 < T3.

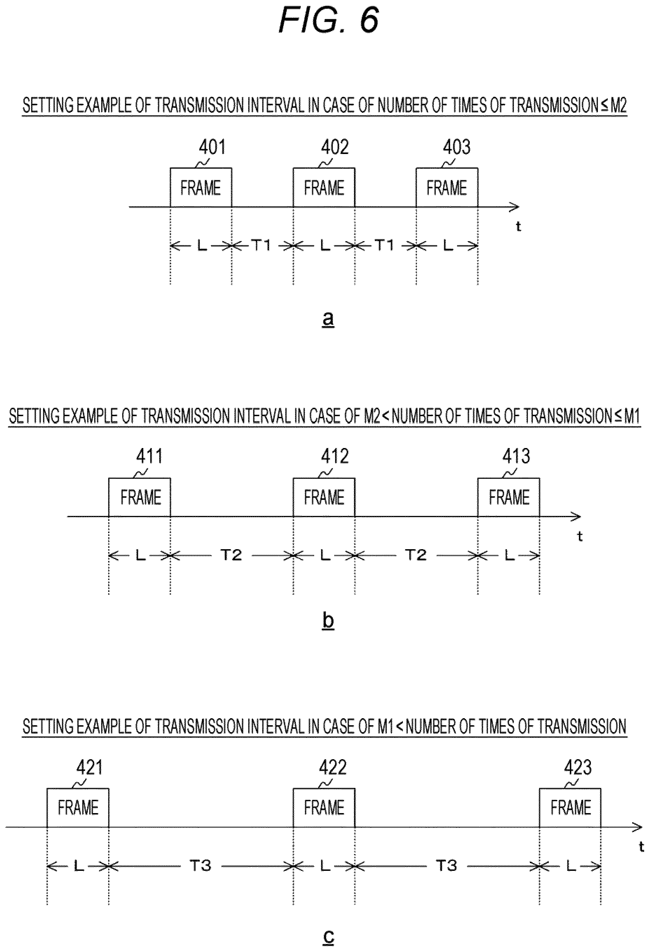

In addition, for example, each of transmission interval offsets may be set to an integral multiple of a frame length. For example, in a case where the frame length is L, the transmission interval offsets may be determined as $T1 = 1 \times L$, $T2 = 2 \times L$, and $T3 = 3 \times L$. Fig. 6 shows setting examples determined in this manner.

[Setting Examples of Transmission Intervals]

Fig. 6 is a diagram showing setting examples of a transmission interval of data in a case where the wireless communication devices 100 through 102 transmit data to the base stations 201 and 202 according to the embodiment of the present technology.

As shown in Fig. 6, the values T1 through T3 are set as intervals (transmission intervals) between frames corresponding to transmission targets to the base station, and frames corresponding to re-transmission targets after transmission of the transmission target frames according to the example of the embodiment of the present technology. In addition, Fig. 6 shows an example which determines the respective transmission intervals as $T1 = 1 \times L$, $T2 = 2 \times L$, and $T3 = 3 \times L$ on the basis of the frame length L.

For example, in a case where the number of times of transmission is M2 or smaller as shown in part a in Fig. 6, T1 is selected as an interval (transmission interval) between a frame 401 corresponding to a transmission target to the base station, and a frame 402 corresponding to a re-transmission target after transmission of the frame 401. Similarly, T1 is selected as an interval (transmission interval) between the frame 402 and a frame 403 corresponding to a re-transmission target after transmission of the frame 402.

In addition, in a case where the number of times of transmission is M1 or smaller and larger than M2 as shown in part b in Fig. 6, T2 is selected as an interval (transmission interval) between a frame 411 corresponding to a transmission target to the base station, and a frame 412 corresponding to a re-transmission target after transmission of the frame 411. Similarly, T2 is selected as an interval (transmission interval) between the frame 412 and a frame 413 corresponding to a re-transmission target after transmission of the frame 412.

In addition, in a case where the number of times of transmission is larger than M1 as shown in part c in Fig. 6, T3 is selected as an interval (transmission interval) between a frame 421 corresponding to a transmission target to the base station, and a frame 422 corresponding to a re-transmission target after transmission of the frame 421. Similarly, T3 is selected as an interval (transmission interval) between the frame 422 and a frame 423 corresponding to a re-transmission target after transmission of the frame 422.

As apparent from above, the transmission intervals may be made longer in a case where the number of times of transmission rises. In this case, occupancy of wireless resources decreases. Moreover, transmission by a different device may be further performed at blanks produced by the transmission intervals set longer than the frame length.

[Operation Example of Wireless Communication Device]

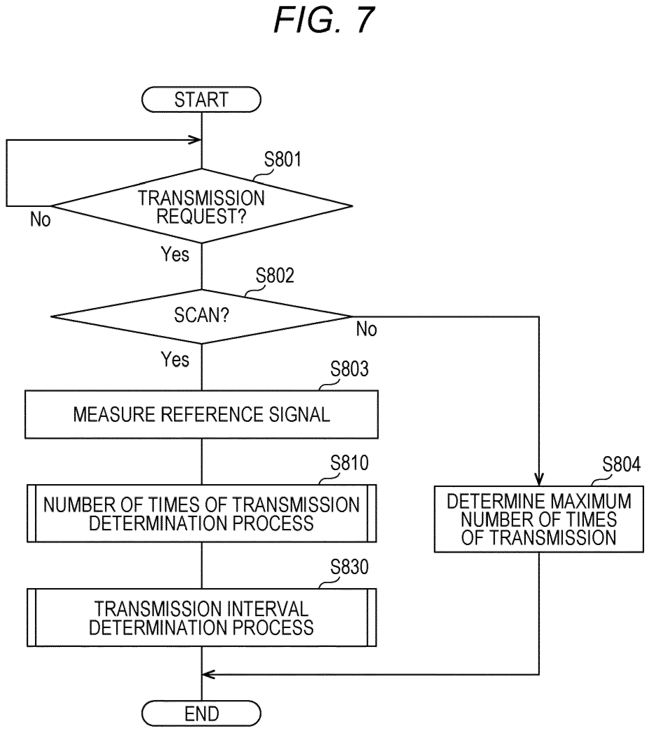

Fig. 7 is a flowchart showing an example of processing procedures of a transmission process performed by the wireless communication device 100 according to the embodiment of the present technology. Fig. 7 shows an operation example of the wireless communication device 100 which determines the number of times of transmission and transmission intervals of data for transmission to the base station. Note that operation examples performed by the wireless communication devices 101 and 102 are identical to the operation example of the wireless communication device 100. Accordingly, only the operation of the wireless communication device 100 is touched upon, while description of the operation of the wireless communication devices 101 and 102 is omitted.

Initially, the control unit 120 of the wireless communication device 100 determines whether or not a transmission request has been issued to the base station (step S801). It is assumed, for example, that information is transmitted from the wireless communication device 100 to the base station in a case where new information (such as sensor information) is acquired by the information acquisition unit 140, or in a case where a definite change (such as change equivalent to threshold or more) is produced in information acquired by the information acquisition unit 140. According to this example, it is assumed that a transmission request is issued on an occasion of acquisition of sensor information or a change of sensor information. Then, in a case where no transmission request is issued to the base station (step S801), monitoring continues.

In a case where a transmission request is issued to the base station (S801), the control unit 120 determines whether to execute a scan operation (step S802). Execution of the scan operation herein consumes a certain amount of power. It is therefore preferable that the scan operation is not performed in a case where small battery quantity is left. Accordingly, the control unit 120 may determine whether to execute the scan operation on the basis of the battery residual quantity of the wireless communication device 100 (step S802). For example, in a case where the battery residual quantity of the wireless communication device 100 is large with respect to a threshold, the control unit 120 determines to execute the scan operation (step S802) . On the other hand, in a case where the battery residual quantity of the wireless communication device 100 is small with respect to the threshold, the control unit 120 determines not to execute the scan operation (step S802) . It may therefore be determined whether to execute the scan operation in consideration of the battery residual quantity of the wireless communication device 100.

In a case where execution of the scan operation is determined (step S802), the control unit 120 measures reception power of reference signals cyclically transmitted from the base station (step S803). For example, reception power may be acquired on the basis of a correlating value of a preamble/sync part constituting a fixed pattern. Note that step S803 is an example of a first procedure according to the appended claims.

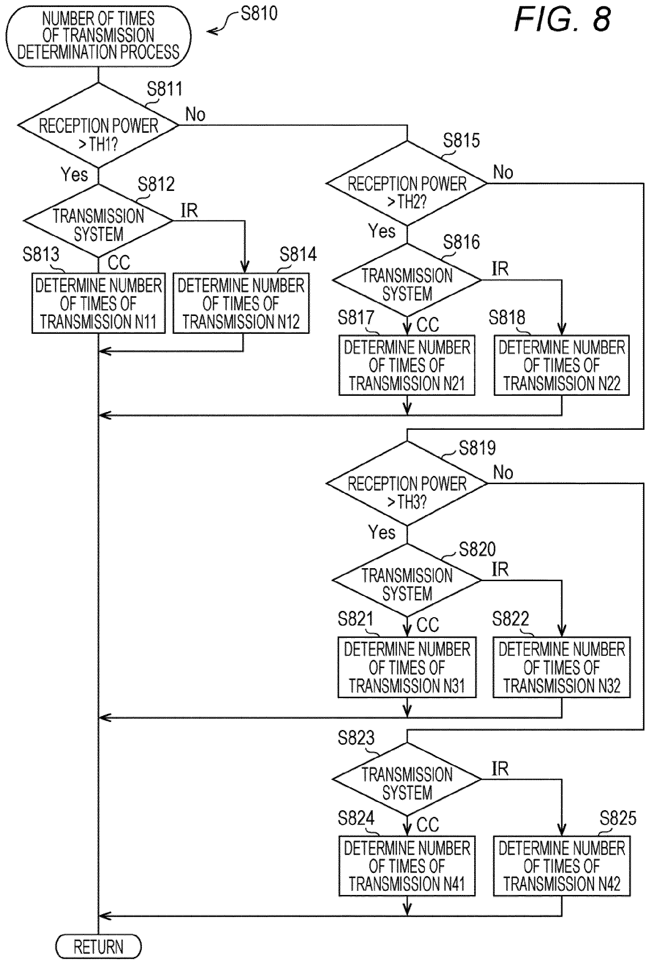

Subsequently, a number of times of transmission determination process is performed (step S810) . This number of times of transmission determination process will be detailed with reference to Fig. 8. Note that step S810 is an example of a second procedure according to the appended claims.

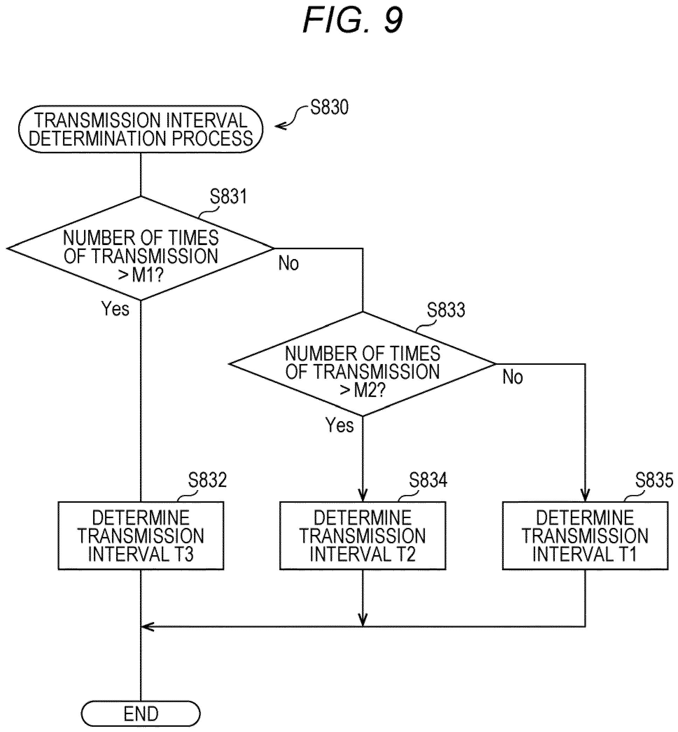

Subsequently, a transmission interval determination process is performed (step S830). This transmission interval determination process will be detailed with reference to Fig. 9.

Accordingly, the example discussed in the embodiment of the present technology is an example which determines the transmission intervals after determination of the number of times of transmission.

In addition, in a case where it is determined not to execute the scan operation (step S802), the control unit 120 determines the maximum number of times of transmission given beforehand (step S804). It is preferable, for example, that the maximum number of times of transmission is set to a number of times of transmission consuming lower power than power consumed in a case where the scan operation is executed.

For example, the number of times of transmission N41 or N42 may be determined in accordance a transmission system to be adopted. For example, in a case where the transmission system is CC system, the control unit 120 may determine the number of times of transmission N41 (step S804) . On the other hand, in a case where the transmission system is IR system, the control unit 120 may determine the number of times of transmission N42 (step S804). The number of times of transmission N41 or N42 will be detailed with reference to Fig. 8. Note that values different from the number of times of transmission N41 or N42 may be determined (such as values around N41 and N42 or values N41 and N42 or larger).

[Operation Example of Number of Times of Transmission Determination Process]

Fig. 8 is a flowchart showing the number of times of transmission determination process (processing procedure in step S810 shown in Fig. 7) in the processing procedures of the transmission process performed by the wireless communication device 100 according to the embodiment of the present technology.

Initially, the control unit 120 of the wireless communication device 100 determines whether or not reception power of a measured reference signal is higher than the threshold TH1 (step S811). In a case where the reception power of the reference signal is higher than the threshold TH1 (step S811), the control unit 120 determines the number of times of transmission in accordance with the transmission system (steps S812 through S814). More specifically, in a case where the transmission system is CC system (step S812), the control unit 120 determines the number of times of transmission N11 (step S813) . On the other hand, in a case where the transmission system is IR system (step S812), the control unit 120 determines the number of times of transmission N12 (step S814).

In a case where the reception power of the reference signal is the threshold TH1 or lower (step S811), the control unit 120 determines whether or not the measured reception power of the reference signal is higher than the threshold TH2 (step S815).

In a case where the reception power of the reference signal is higher than the threshold TH2 (step S811), the control unit 120 determines the number of times of transmission in accordance with the transmission system (steps S816 through S818) . More specifically, in a case where the transmission system is CC system (step S816), the control unit 120 determines the number of times of transmission N21 (step S817). On the other hand, in a case where the transmission system is IR system (step S816), the control unit 120 determines the number of times of transmission N22 (step S818) .

In a case where the reception power of the reference signal is the threshold TH2 or lower (step S815), the control unit 120 determines whether or not the measured reception power of the reference signal is higher than the threshold TH3 (step S819).

In a case where the reception power of the reference signal is higher than the threshold TH3 (step S819), the control unit 120 determines the number of times of transmission in accordance with the transmission system (steps S820 through S822) . More specifically, in a case where the transmission system is CC system (step S820), the control unit 120 determines the number of times of transmission N31 (step S821). On the other hand, in a case where the transmission system is IR system (step S820), the control unit 120 determines the number of times of transmission N32 (step S822) .

In addition, in a case where the reception power of the reference signal is the threshold TH3 or lower (step S819), the control unit 120 determines the number of times of transmission in accordance with the transmission system (steps S823 through S825) . More specifically, in a case where the transmission system is CC system (step S823), the control unit 120 determines the number of times of transmission N41 (step S824). On the other hand, in a case where the transmission system is IR system (step S823), the control unit 120 determines the number of times of transmission N42 (step S825) .

Note that, while the three thresholds TH1 through TH3 are defined as thresholds compared with reception power of a reference signal in the example of Figs. 4 and 8, one, two, four or more thresholds may be adopted as thresholds . In this case, the number of times of transmission may be set in accordance with the number of thresholds to be adopted.

As described above, the control unit 120 may determine the number of times of transmission on the basis of a result of comparison between reception power of a reference signal and a threshold. For example, in a case where reception power of a reference signal is high with respect to a threshold, the control unit 120 may set the number of times of transmission to a value smaller than the number of times of transmission determined in a case where reception power of a reference signal is low with respect to the threshold. In this case, the control unit 120 may determine the number of times of transmission on the basis of the transmission system for data transmission (such as CC system and IR system), and on reception power of the reference signal.

On the other hand, in a case where reception power of the reference signal is low with respect to the threshold, or in a case where detection of a reference signal is difficult, the control unit 120 may determine the maximum in the plurality of numbers of times of transmission set beforehand, or an approximate value of this maximum.

[Operation Example of Transmission Interval Determination Process]

Fig. 9 is a flowchart showing the transmission interval determination process (processing procedure in step S830 shown in Fig. 7) in the processing procedures of the transmission process performed by the wireless communication device 100 according to the embodiment of the present technology.

The control unit 120 of the wireless communication device 100 compares the number of times of transmission determined by the number of times of transmission determination process with the thresholds M1 and M2, and determines a transmission interval (transmission interval offset) (steps S831 through S835).

More specifically, the control unit 120 determines whether or not the number of times of transmission determined by the number of times of transmission determination process is larger than the threshold M1 (step S831) . In a case where the number of times of transmission is larger than the threshold M1 (step S831), the control unit 120 determines T3 as the transmission interval (step S832) . Part c in Fig. 6 shows a setting example of the transmission interval T3 in a case where the number of times of transmission is larger than the threshold M1.

In a case where the number of times of transmission is the threshold M1 or smaller (step S831), the control unit 120 determines whether or not the number of times of transmission determined by the number of times of transmission determination process is larger than the threshold M2 (step S833). In a case where the number of times of transmission is larger than the threshold M2 (step S833), the control unit 120 determines T2 as the transmission interval (step S834) . Part b in Fig. 6 shows a setting example of the transmission interval T2 in a case where the number of times of transmission is larger than the threshold M2 and equal to or smaller than the threshold M1.

In a case where the number of times of transmission is the threshold M2 or smaller (step S833), the control unit 120 determines T1 as the transmission interval (step S835) . Part a in Fig. 6 shows a setting example of the transmission interval T1 in a case where the number of times of transmission is the threshold M2 or smaller.

Note that, while the two thresholds M1 and M2 are adopted as the thresholds compared with the number of times of transmission in the example shown in Figs. 5 and 9, one, three or more thresholds may be adopted as thresholds . In this case, the transmission interval may be determined in accordance with the number of thresholds to be adopted.

As described above, the control unit 120 may determine the transmission interval on the basis of a result of comparison between a threshold and the number of times of transmission determined by the number of times of transmission determination process. For example, in a case where the number of times of transmission is large with respect to a threshold, the control unit 120 may set the transmission interval to a value larger than the transmission interval determined in a case where the number of times of transmission is small with respect to the threshold. In this case, the control unit 120 may set the transmission interval to an integral multiple of the frame length of data.

According to the embodiment of the present technology, therefore, the number of times of transmission may be appropriately determined in a case where transmission is performed a plurality of times by a wireless communication device not having a particular reception function (such as ACK reception function) for the purpose of increasing a communication distance. In addition, a transmission interval may be appropriately determined in accordance with the determined number of times of transmission to effectively utilize wireless resources. Accordingly, appropriate data communication between respective devices is realizable even in a case of data communication utilizing wireless communication between devices having different reception functions.

It is assumed herein that a range of bidirectional communication and a range of unidirectional communication between a base station (such as base stations 201, 202) and a wireless communication device (such as wireless communication devices 100 through 102) are overlaid with each other according to the embodiment of the present technology. The range of bidirectional communication herein corresponds to a range allowing transmission and reception by both the base station and the wireless communication device. On the other hand, the range of unidirectional communication corresponds to a range allowing transmission and reception only by either one of the base station and the wireless communication device.

Even in a case where the bidirectional communication range and the unidirectional communication range are overlaid with each other (i.e., in case of communication system having asymmetric communication range) as in the above assumption, appropriate selection of transmission parameters (such as number of times of transmission and transmission interval) is realizable. In other words, transmission parameters appropriate for either the bidirectional communication range or the unidirectional communication range are switchable to transmission parameters appropriate for the other communication range.

<2. Application Example>

The technology according to the present disclosure is applicable to various types of products. For example, each of the wireless communication devices 100 through 102 and the base stations 201 and 202 may be realized as a mobile terminal such as a smartphone, a tablet personal computer (PC), a laptop PC, a portable game machine terminal, and a digital camera, a fixed terminal such as a television receiver, a printer, a digital scanner, and a network storage, and an in-vehicle terminal such as a car navigation device. Alternatively, each of the wireless communication devices 100 through 102 and the base stations 201 and 202 may be realized as a terminal performing machine to machine (M2M) communication (also called machine type communication (MTC) terminal) such as a smart meter, a vending machine, a remote monitoring device, and a point of sale (POS) terminal. Instead, each of the wireless communication devices 100 through 102 and the base stations 201 and 202 may be provided as a wireless communication module mounted on these terminals (such as integrated circuit module formed with one die).

On the other hand, for example, each of the base stations 201 and 202 may be realized as a wireless LAN access point (also called wireless base station) having or not having a router function. Alternatively, each of the base stations 201 and 202 may be realized as a mobile wireless LAN router. Instead, each of the base stations 201 and 202 may be provided as a wireless communication module mounted on these devices (such as integrated circuit module formed with one die).

[2-1. First Application Example]

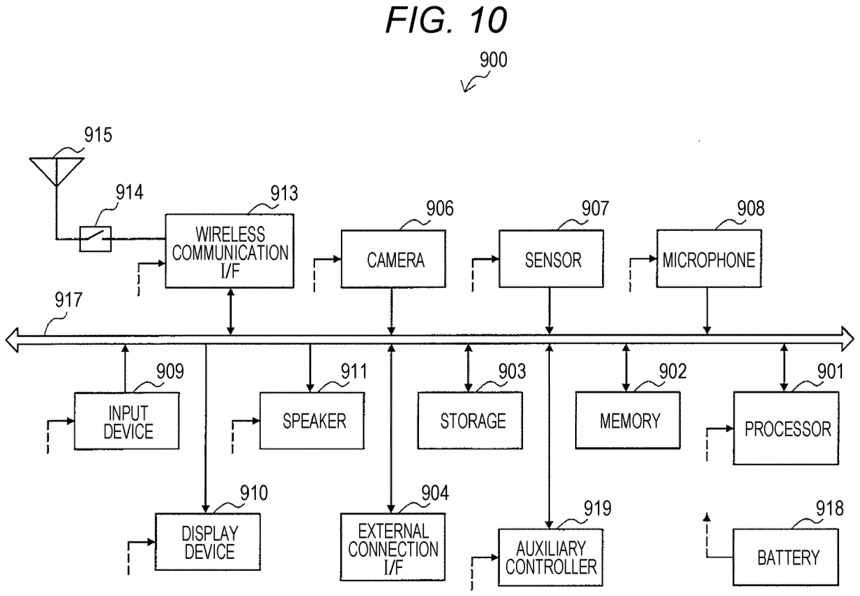

Fig. 10 is a block diagram showing a general configuration example of a smartphone 900 to which the technology according to the present disclosure is applied. The smartphone 900 includes a processor 901, a memory 902, a storage 903, an external connection interface 904, a camera 906, a sensor 907, a microphone 908, an input device 909, a display device 910, a speaker 911, a wireless communication interface 913, an antenna switch 914, an antenna 915, a bus 917, a battery 918, and an auxiliary controller 919.

For example, the processor 901 may be constituted by a central processing unit (CPU) or a system on chip (SoC), and controls functions of application layers or other layers of the smartphone 900. The memory 902 includes a random access memory (RAM) and a read only memory (ROM), and stores programs executed by the processor 901 and data. The storage 903 may include a storage medium such as a semiconductor memory and a hard disk. The external connection interface 904 is an interface for connecting an external device such as a memory card or a universal serial bus (USB) device to the smartphone 900.

The camera 906 includes an imaging device such as a charge coupled device (CCD) and a complementary metal oxide semiconductor (CMOS), and forms a captured image. The sensor 907 may include a sensor group such as a positioning sensor, a gyro sensor, a geomagnetic sensor, and an acceleration sensor. The microphone 908 converts voices input to the smartphone 900 into audio signals. The input device 909 includes a touch sensor for detecting a touch to a screen of the display device 910, a keypad, a keyboard, buttons, and switches, for example, and receives operations or information input from a user. The display device 910 includes a screen such as a liquid crystal display (LCD) and an organic light emitting diode (OLED) display, and displays an output image from the smartphone 900. The speaker 911 converts audio signals input from the smartphone 900 into voices.

The wireless communication interface 913 supports one or more of wireless LAN standards such as IEEE 802.11a, 11b, 11g, 11n, 11ac, and 11ad, and executes wireless communication. The wireless communication interface 913 may communicate with other devices via wireless LAN access points in an infrastructure mode. In addition, the wireless communication interface 913 may directly communicate with other devices in a direct communication mode such as ad hoc mode and Wi-Fi direct. Note that one of two terminals operates as an access point in Wi-Fi Direct unlike the ad hoc mode. However, communication is directly executed between these terminals. Typically, the wireless communication interface 913 may include a baseband processor, a radio frequency (RF) circuit, a power amplifier and the like. The wireless communication interface 913 may be a one-chip module which integrates a memory storing a communication control program, a processor executing this program, and associated circuits. The wireless communication interface 913 may support other types of wireless communication system such as a short-range wireless communication system, a close wireless communication system, and a cellular communication system, as well as the wireless LAN system. Then antenna switch 914 switches connection of the antenna 915 between a plurality of circuits included in the wireless communication interface 913 (such as circuits for different wireless communication systems). The antenna 915 includes a single or a plurality of antenna elements (such as a plurality of antenna elements constituting MIMO antenna) used for wireless signal transmission and reception via the wireless communication interface 913.

Note that the smartphone 900 is not required to have the configuration shown in Fig. 10 as an example, but may include a plurality of antennas (such as wireless LAN antenna and close wireless communication system antenna). In this case, the antenna switch 914 may be eliminated from the configuration of the smartphone 900.

The bus 917 connects the processor 901, the memory 902, the storage 903, the external connection interface 904, the camera 906, the sensor 907, the microphone 908, the input device 909, the display device 910, the speaker 911, the wireless communication interface 913, and the auxiliary controller 919 to each other. The battery 918 supplies power to respective blocks of the smartphone 900 shown in Fig. 10 via a power supply line a part of which is indicated by dotted lines in the figure. The auxiliary controller 919 secures operations associated with minimum necessary functions of the smartphone 900 in a sleep mode, for example.

According to the smartphone 900 shown in Fig. 10, the control unit 120 described with reference to Fig. 2 may be incorporated in the wireless communication interface 913. In addition, at least a part of the functions of the smartphone 900 may be incorporated in the processor 901 or the auxiliary controller 919.

Note that the smartphone 900 may operate as a wireless access point (software AP) by an application-level access point function executed by the processor 901. Alternatively, the wireless access point function may be performed by the wireless communication interface 913.

[2-2. Second Application Example]

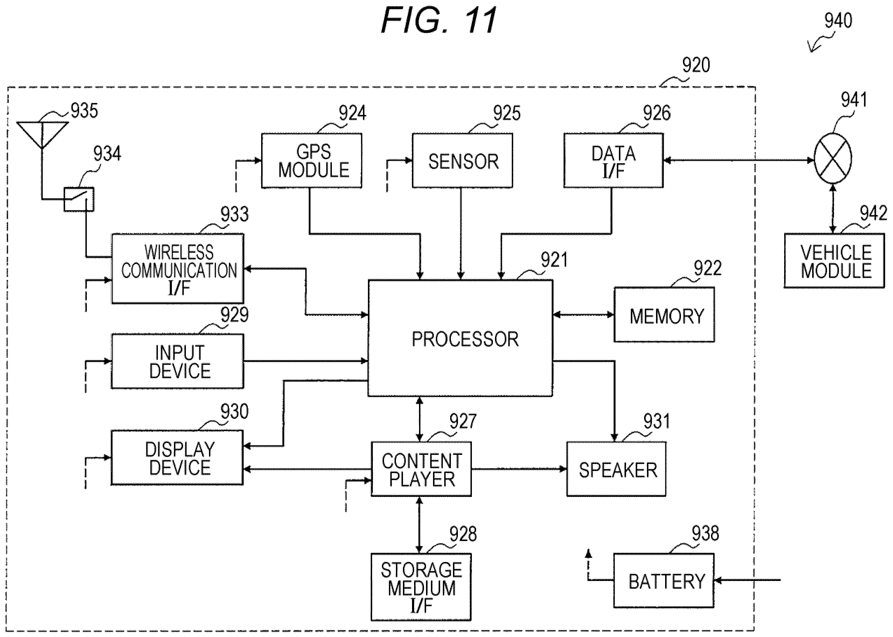

Fig. 11 is a block diagram showing an example of a general configuration of a car navigation device 920 to which the technology according to the present disclosure is applicable. The car navigation device 920 includes a processor 921, a memory 922, a global positioning system (GPS) module 924, a sensor 925, a data interface 926, a content player 927, a storage medium interface 928, an input device 929, a display device 930, a speaker 931, a wireless communication interface 933, an antenna switch 934, an antenna 935, and a battery 938.

The processor 921 may be constituted by a CPU or an SoC, and controls a navigation function and other functions of the car navigation device 920. The memory 922 includes a RAM and a ROM, and stores programs executed by the processor 921 and data.

The GPS module 924 measures a position of the car navigation device 920 (such as latitude, longitude, and altitude) on the basis of GPS signals received from a GPS satellite. For example, the sensor 925 may include a sensor group such as a gyro sensor, a geomagnetic sensor, and a pressure sensor. The data interface 926 is connected to an in-vehicle network 941 via a not-shown terminal to obtain data generated by a vehicle such as vehicle speed data.

The content player 927 reproduces content stored in a storage medium (such as CD and DVD) inserted into the storage medium interface 928. For example, the input device 929 includes a touch sensor for detecting a touch to a screen of the display device 930, buttons, switches and the like, and receives operations or information input from a user. The display device 930 includes a screen such as an LCD display and an OLED display, and displays navigation functions or images of content to be reproduced. The speaker 931 outputs navigation functions or voices of content to be reproduced.

The wireless communication interface 933 supports one or more of wireless LAN standards such as IEEE 802.11a, 11b, 11g, 11n, 11ac, and 11ad, and executes wireless communication. The wireless communication interface 933 may communicate with other devices via wireless LAN access points in an infrastructure mode. In addition, the wireless communication interface 933 may directly communicate with other devices in a direct communication mode such as ad hoc mode and Wi-Fi direct. Typically, the wireless communication interface 933 may include a baseband processor, an RF circuit, a power amplifier and the like. The wireless communication interface 933 may be a one-chip module which integrates a memory storing a communication control program, a processor executing this program, and associated circuits. The wireless communication interface 933 may support other types of wireless communication system such as a short-range wireless communication system, a close wireless communication system, and a cellular communication system, as well as the wireless LAN system. The antenna switch 934 switches connection of the antenna 935 between a plurality of circuits included in the wireless communication interface 933. The antenna 935 includes a single or a plurality of antenna elements used for wireless signal transmission and reception via the wireless communication interface 933.

Note that the car navigation device 920 is not required to have the configuration of the example shown in Fig. 11, but may include a plurality of antennas. In this case, the antenna switch 934 may be eliminated from the configuration of the car navigation device 920.

The battery 938 supplies power to respective blocks of the car navigation device 920 shown in Fig. 11 via a power supply line a part of which is indicated by dotted lines in the figure. In addition, the battery 938 accumulates power supplied from the vehicle.

According to the car navigation device 920 shown in Fig. 11, the control unit 120 described with reference to Fig. 2 may be incorporated in the wireless communication interface 933. In addition, at least a part of the functions of the car navigation device 920 may be incorporated in the processor 921.

In addition, the wireless communication interface 933 may function as the base station 201 or 202 described above to provide wireless connection to a terminal carried by a user present in the vehicle.

Furthermore, the technology according to the present disclosure may be realized as an in-vehicle system (or vehicle) 940 which includes one or more blocks of the car navigation device 920 described above, an in-vehicle network 941, and a vehicle module 942. The vehicle module 942 generates vehicle data such as a vehicle speed, an engine speed, and malfunction information, and outputs the generated data to the in-vehicle network 941.

[2-3. Third Application Example]

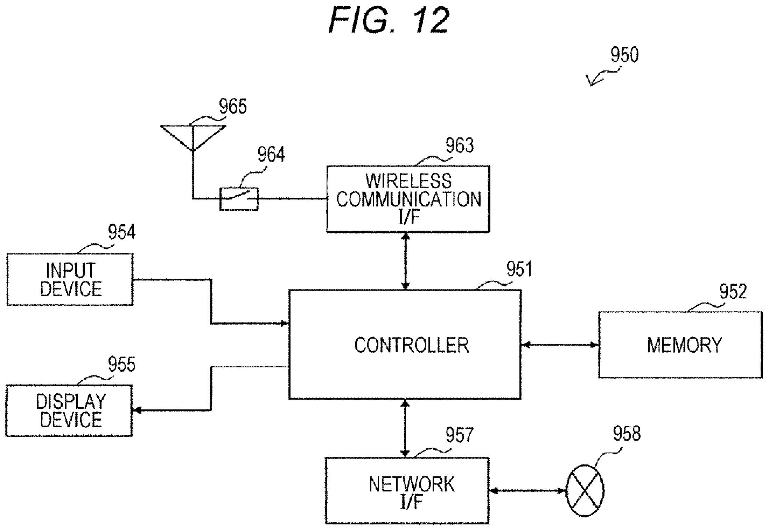

Fig. 12 is a block diagram showing an example of a general configuration of a wireless access point 950 to which the technology according to the present disclosure is applicable. The wireless access point 950 includes a controller 951, a memory 952, an input device 954, a display device 955, a network interface 957, a wireless communication interface 963, an antenna switch 964, and an antenna 965.

The controller 951 may be constituted by a CPU or a digital signal processor (DSP), for example, and performs various functions of layers higher than an Internet protocol (IP) layer of the wireless access point 950 (such as access limitation, routing, encryption, fire wall, and log management). The memory 952 includes a RAM and a ROM, and stores programs executed by the controller 951, and various types of control data (such as terminal list, routing table, encryption key, security setting, and log).

The input device 954 includes buttons, switches or the like, and receives an operation from a user. The display device 955 includes an LED lamp or the like, and displays an operation status of the wireless access point 950.

The network interface 957 is a wired communication interface providing connection between the wireless access point 950 and a wired communication network 958. The network interface 957 may include a plurality of connection terminals. The wired communication network 958 may be a LAN such as Ethernet (registered trademark), or may be a wide area network (WAN).

The wireless communication interface 963 supports one or more of wireless LAN standards such as IEEE 802.11a, 11b, 11g, 11n, 11ac, and 11ad, and provides wireless connection as an access point to a near terminal. Typically, the wireless communication interface 963 may include a baseband processor, an RF circuit, a power amplifier and the like. The wireless communication interface 963 may be a one-chip module which integrates a memory storing a communication control program, a processor executing this program, and associated circuits. The antenna switch 964 switches connection of the antenna 965 between a plurality of circuits included in the wireless communication interface 963. The antenna 965 includes a single or a plurality of antenna elements used for wireless signal transmission and reception via the wireless communication interface 963.

According to the wireless access point 950 shown in Fig. 12, the control unit 120 described with reference to Fig. 2 may be incorporated in the wireless communication interface 963. In addition, at least a part of the functions of the wireless access point 950 may be incorporated in the controller 951.

Note that the embodiments described herein are presented only by way of example embodying the present technology. Matters included in the embodiments and matters specifying the invention according to the appended claims correlate with each other. Similarly, the matters specifying the invention according to the appended claims, and matters included in the embodiments of the present technology and given names identical to the corresponding matters specifying the invention correlate with each other. However, the present technology is not limited to the embodiments herein, but may be realized with various modifications of the embodiments without departing from the subject matters of the appended claims.

In addition, the processing procedures described in the foregoing embodiments may be considered as a method including a series of these procedures, as a program under which a computer executes the series of procedures, or as a recording medium in which the program is stored. The recording medium may be constituted by a compact disc (CD), a minidisc (MD), a digital versatile disc (DVD), a memory card, a Blu-ray (registered trademark) disc, or others.

Note that effects to be produced are not limited to the effects described in the present specification presented only by way of example. Additional effects may be also produced.


REFERENCE SIGNS LIST

| | |
|---|---|
| 10 | Communication system |
| 100 to 102 | Wireless communication device |
| 110 | Communication unit |
| 120 | Control unit |
| 130 | Storage unit |
| 140 | Information acquisition unit |
| 150 | Power supply unit |
| 201, 202 | Base station |
| 210 | Information processing device |
| 900 | Smartphone |
| 901 | Processor |
| 902 | Memory |
| 903 | Storage |
| 904 | External connection interface |
| 906 | Camera |
| 907 | Sensor |
| 908 | Microphone |
| 909 | Input device |
| 910 | Display device |
| 911 | Speaker |
| 913 | Wireless communication interface |
| 914 | Antenna switch |
| 915 | Antenna |
| 917 | Bus |
| 918 | Battery |
| 919 | Auxiliary controller |
| 920 | Car navigation device |
| 921 | Processor |
| 922 | Memory |
| 924 | GPS module |
| 925 | Sensor |
| 926 | Data interface |
| 927 | Content player |

| 928 | Storage medium interface |
|-----|--------------------------|
| 929 | Input device |
| 930 | Display device |
| 931 | Speaker |
| 933 | Wireless communication interface |
| 934 | Antenna switch |
| 935 | Antenna |
| 938 | Battery |
| 941 | In-vehicle network |
| 942 | Vehicle module |
| 950 | Wireless access point |
| 951 | Controller |
| 952 | Memory |
| 954 | Input device |
| 955 | Display device |
| 957 | Network interface |
| 958 | Wired communication network |
| 963 | Wireless communication interface |
| 964 | Antenna switch |
| 965 | Antenna |

**Claims**

1. A wireless communication device comprising:

   a communication unit (110) configured to receive a reference signal transmitted from a different device (201, 202) by using wireless communication; and
   a control unit (120) configured to determine, on the basis of reception power of the reference signal, a number of times of transmission, said number indicating how many times transmission target data is repeatedly transmitted to the different device, and to determine a transmission interval of the transmission target data on the basis of the determined number of times of transmission.

2. The wireless communication device according to claim 1, wherein the control unit (120) is configured to determine the number of times of transmission on the basis of a result of comparison between the reception power and a threshold.

3. The wireless communication device according to claim 2, wherein, in a case where the reception power is higher with respect to the threshold, the control unit (120) is configured to set the number of times of transmission to a value smaller than the number of times of transmission set in a case where the reception power is lower with respect to the threshold.

4. The wireless communication device according to claim 1, wherein, in a case where the reception power is lower with respect to the threshold, the control unit (120) is configured to determine a maximum in a plurality of numbers of times of transmission set beforehand, or an approximate value of the maximum.

5. The wireless communication device according to claim 1, wherein the control unit (120) is configured to determine the number of times of transmission on the basis of a transmission system for transmitting the data and the reception power.

6. The wireless communication device according to claim 1, wherein the control unit (120) is configured to determine the transmission interval on the basis of a result of comparison between a threshold and the determined number of times of transmission.

7. The wireless communication device according to claim 6, wherein, in a case where the determined number of times of transmission is larger with respect to the threshold, the control unit (120) is configured to set the transmission interval to a value larger than the transmission interval set in a case where the determined number of times of transmission is smaller with respect to the threshold.

8. The wireless communication device according to claim 1, wherein the control unit (120) is configured to set the transmission interval to an integral multiple of a frame length of the data.

9. An information processing method comprising:

a first procedure that measures reception power of a reference signal transmitted from a different device by using wireless communication; and
a second procedure that determines, on the basis of reception power of the reference signal, a number of times of transmission, said number indicating how many times data is repeatedly transmitted to the different device, and that determines a transmission interval of the transmission target data on the basis of the determined number of times of transmission.

10. A computer program comprising instructions to cause the wireless communication device of claim 1 to execute the steps of the method of claim 9.

**Patentansprüche**

1. Drahtlose Kommunikationsvorrichtung, die Folgendes umfasst:

eine Kommunikationseinheit (110), die dazu ausgelegt ist, ein von einer anderen Vorrichtung (201, 202) übertragenes Referenzsignal mittels Drahtloskommunikation zu empfangen; und
eine Steuereinheit (120), die dazu ausgelegt ist, auf der Basis der Empfangsleistung des Referenzsignals eine Anzahl von Malen einer Übertragung zu ermitteln, wobei die Anzahl angibt, wie viele Male Übertragungszieldaten wiederholt zu der anderen Vorrichtung übertragen werden, und ein Übertragungsintervall der Übertragungszieldaten auf der Basis der ermittelten Anzahl von Malen einer Übertragung zu bestimmen.

2. Drahtlose Kommunikationsvorrichtung gemäß Anspruch 1, wobei die Steuereinheit (120) dazu ausgelegt ist, die Anzahl von Malen einer Übertragung auf der Basis eines Ergebnisses eines Vergleichs zwischen der Empfangsleistung und einem Schwellenwert zu ermitteln.

3. Drahtlose Kommunikationsvorrichtung gemäß Anspruch 2, wobei, in einem Fall, in dem die Empfangsleistung in Bezug auf den Schwellenwert höher ist, die Steuereinheit (120) dazu ausgelegt ist, die Anzahl von Malen einer Übertragung auf einen Wert einzustellen, der kleiner als die Anzahl von Malen einer Übertragung ist, die in einem Fall eingestellt wird, in dem die Empfangsleistung in Bezug auf den Schwellenwert niedriger ist.

4. Drahtlose Kommunikationsvorrichtung gemäß Anspruch 1, wobei, in einem Fall, in dem die Empfangsleistung in Bezug auf den Schwellenwert niedriger ist, die Steuereinheit (120) dazu ausgelegt ist, ein Maximum in einer zuvor eingestellten Vielzahl von Anzahl von Malen einer Übertragung oder einen Näherungswert des Maximums zu ermitteln.

5. Drahtlose Kommunikationsvorrichtung gemäß Anspruch 1, wobei die Steuereinheit (120) dazu ausgelegt ist, die Anzahl von Malen einer Übertragung auf der Basis eines Ergebnisses eines Übertragungssystems zum Übertragen der Daten und der Empfangsleistung zu ermitteln.

6. Drahtlose Kommunikationsvorrichtung gemäß Anspruch 1, wobei die Steuereinheit (120) dazu ausgelegt ist, das Übertragungsintervall auf der Basis eines Ergebnisses eines Vergleichs zwischen einem Schwellenwert und der ermittelten Anzahl von Malen einer Übertragung zu ermitteln.

7. Drahtlose Kommunikationsvorrichtung gemäß Anspruch 6, wobei, in einem Fall, in dem die ermittelte Anzahl von Malen einer Übertragung in Bezug auf den Schwellenwert größer ist, die Steuereinheit (120) dazu ausgelegt ist, das Übertragungsintervall auf einen Wert einzustellen, der größer als das Intervall ist, das in einem Fall eingestellt wird, in dem die ermittelte Anzahl von Malen einer Übertragung in Bezug auf den Schwellenwert kleiner ist.

8. Drahtlose Kommunikationsvorrichtung gemäß Anspruch 1, wobei die Steuereinheit (120) dazu ausgelegt ist, das Übertragungsintervall auf ein ganzzahliges Vielfaches einer Rahmenlänge der Daten einzustellen.

9. Informationsverarbeitungsverfahren, das Folgendes umfasst:

ein erstes Verfahren, das die Empfangsleistung eines mittels Drahtloskommunikation von einer anderen Vorrichtung übertragenen Referenzsignals misst; und

ein zweites Verfahren, das auf der Basis der Empfangsleistung des Referenzsignals eine Anzahl von Malen einer Übertragung ermittelt, wobei die Anzahl angibt, wie viele Male Übertragungszieldaten wiederholt zu der anderen Vorrichtung übertragen werden, und das ein Übertragungsintervall der Übertragungszieldaten auf der Basis der ermittelten Anzahl von Malen einer Übertragung bestimmt.

10. Computerprogramm, das Anweisungen umfasst, um die drahtlose Kommunikationsvorrichtung nach Anspruch 1 zu veranlassen, die Schritte des Verfahrens nach Anspruch 9 auszuführen.

**Revendications**

1. Dispositif de communication sans fil, comprenant :

   une unité de communication (110) configurée pour recevoir un signal de référence transmis à partir d'un autre dispositif (201, 202) en utilisant une communication sans fil; et
   une unité de commande (120) configurée pour déterminer, sur la base de la puissance de réception du signal de référence, un nombre de fois de transmission, ledit nombre indiquant combien de fois des données de cibles de transmission sont transmises de façon répétée à l'autre dispositif, et déterminer un intervalle de transmission des données de cibles de transmission sur la base du nombre de fois de transmission déterminé.

2. Dispositif de communication sans fil selon la revendication 1, dans lequel l'unité de commande (120) est configurée pour déterminer le nombre de fois de transmission sur la base d'un résultat de comparaison entre la puissance de réception et un seuil.

3. Dispositif de communication sans fil selon la revendication 2, dans lequel, dans le cas où la puissance de réception est supérieure par rapport au seuil, l'unité de commande (120) est configurée pour fixer le nombre de fois de transmission à une valeur inférieure au nombre de fois de transmission fixé dans le cas où la puissance de réception est inférieure par rapport au seuil.

4. Dispositif de communication sans fil selon la revendication 1, dans lequel, dans le cas où la puissance de réception est inférieure par rapport au seuil, l'unité de commande (120) est configurée pour déterminer un maximum dans une pluralité de nombres de fois de transmission fixés à l'avance, ou une valeur approchée du maximum.

5. Dispositif de communication sans fil selon la revendication 1, dans lequel l'unité de commande (120) est configurée pour déterminer le nombre de fois de transmission sur la base d'un système de transmission pour transmettre les données et de la puissance de réception.

6. Dispositif de communication sans fil selon la revendication 1, dans lequel l'unité de commande (120) est configurée pour déterminer l'intervalle de transmission sur la base d'un résultat de comparaison entre un seuil et le nombre de fois de transmission déterminé.

7. Dispositif de communication sans fil selon la revendication 6, dans lequel, dans le cas où le nombre de fois de transmission déterminé est supérieur par rapport au seuil, l'unité de commande (120) est configurée pour fixer l'intervalle de transmission à une valeur supérieure à l'intervalle de transmission fixé dans le cas où le nombre de fois de transmission déterminé est inférieur par rapport au seuil.

8. Dispositif de communication sans fil selon la revendication 1, dans lequel l'unité de commande (120) est configurée pour fixer l'intervalle de transmission à un multiple entier d'une longueur de trame des données.

9. Procédé de traitement d'informations comprenant :

   une première procédure qui mesure la puissance de réception d'un signal de référence transmis à partir d'un autre dispositif en utilisant une communication sans fil ; et
   une seconde procédure qui détermine, sur la base de la puissance de réception du signal de référence, un nombre de fois de transmission, ledit nombre indiquant combien de fois des données sont transmises de façon répétée à l'autre dispositif, et qui détermine un intervalle de transmission des données de cibles de transmission sur la base du nombre de fois de transmission déterminé.

10. Programme d'ordinateur comprenant des instructions pour amener le dispositif de communication sans fil selon la revendication 1 à exécuter les étapes du procédé selon la revendication 9.

EP 3 249 840 B1

# FIG. 1

# FIG. 2

WIRELESS
COMMUNICATION DEVICE
100

140

INFORMATION
ACQUISITION
UNIT

130

STORAGE
UNIT

120

CONTROL
UNIT

110

COMMUNICATION
UNIT

150

POWER
SUPPLY
UNIT

# FIG. 3

## FRAME FORMAT CONFIGURATION EXAMPLE

| 301 | 302 | 303 | 304 | 305 |
|---|---|---|---|---|
| Preamble/Sync | PHY Header | MAC Header | Payload | CRC |

# FIG. 4

DETERMINATION EXAMPLE OF NUMBER OF TIMES OF TRANSMISSION

| TRANSMISSION SYSTEM / RECEPTION POWER | CC SYSTEM | IR SYSTEM |
|---|---|---|
| TH1 < RECEPTION POWER | N11 | N12 |
| TH2 < RECEPTION POWER ≤ TH1 | N21 | N22 |
| TH3 < RECEPTION POWER ≤ TH2 | N31 | N32 |
| RECEPTION POWER ≤ TH3 | N41 | N42 |

WHERE: TH3 < TH2 < TH1;
N12 < N11; N22 < N21; N32 < N31; N42 < N41;
N11 < N21 < N31 < N41;
N12 < N22 < N32 < N42

# FIG. 5

DETERMINATION EXAMPLE OF TRANSMISSION INTERVAL

| NUMBER OF TIMES OF TRANSMISSION | TRANSMISSION INTERVAL |
|---|---|
| $M1 <$ NUMBER OF TIMES OF TRANSMISSION | T3 |
| $M2 <$ NUMBER OF TIMES OF TRANSMISSION $\leq M1$ | T2 |
| NUMBER OF TIMES OF TRANSMISSION $\leq M2$ | T1 |

WHERE: $M2 < M1$; $T1 < T2 < T3$

# FIG. 6

SETTING EXAMPLE OF TRANSMISSION INTERVAL IN CASE OF NUMBER OF TIMES OF TRANSMISSION ≤ M2

a

SETTING EXAMPLE OF TRANSMISSION INTERVAL IN CASE OF M2 < NUMBER OF TIMES OF TRANSMISSION ≤ M1

b

SETTING EXAMPLE OF TRANSMISSION INTERVAL IN CASE OF M1 < NUMBER OF TIMES OF TRANSMISSION

c

# FIG. 7

START

S801
TRANSMISSION REQUEST?

No

Yes

S802
SCAN?

No

Yes

S803
MEASURE REFERENCE SIGNAL

S810
NUMBER OF TIMES OF TRANSMISSION DETERMINATION PROCESS

S804
DETERMINE MAXIMUM NUMBER OF TIMES OF TRANSMISSION

S830
TRANSMISSION INTERVAL DETERMINATION PROCESS

END

*FIG. 8*

```
        ┌─────────────────────┐
        │  NUMBER OF TIMES    │ ←─── S810
        │  OF TRANSMISSION    │
        │ DETERMINATION PROCESS│
        └─────────────────────┘
```

S811

RECEPTION POWER > TH1? — No

Yes

S812 — TRANSMISSION SYSTEM — IR

CC

S813 — DETERMINE NUMBER OF TIMES OF TRANSMISSION N11

S814 — DETERMINE NUMBER OF TIMES OF TRANSMISSION N12

S815 — RECEPTION POWER > TH2? — No

Yes

S816 — TRANSMISSION SYSTEM — IR

CC

S817 — DETERMINE NUMBER OF TIMES OF TRANSMISSION N21

S818 — DETERMINE NUMBER OF TIMES OF TRANSMISSION N22

S819 — RECEPTION POWER > TH3? — No

Yes

S820 — TRANSMISSION SYSTEM — IR

CC

S821 — DETERMINE NUMBER OF TIMES OF TRANSMISSION N31

S822 — DETERMINE NUMBER OF TIMES OF TRANSMISSION N32

S823 — TRANSMISSION SYSTEM — IR

CC

S824 — DETERMINE NUMBER OF TIMES OF TRANSMISSION N41

S825 — DETERMINE NUMBER OF TIMES OF TRANSMISSION N42

RETURN

26

# FIG. 9

TRANSMISSION INTERVAL DETERMINATION PROCESS — S830

S831

NUMBER OF TIMES OF TRANSMISSION > M1?

No

Yes

S833

NUMBER OF TIMES OF TRANSMISSION > M2?

No

Yes

S832
DETERMINE TRANSMISSION INTERVAL T3

S834
DETERMINE TRANSMISSION INTERVAL T2

S835
DETERMINE TRANSMISSION INTERVAL T1

END

## FIG. 10

900

915
914
913 WIRELESS COMMUNICATION I/F
906 CAMERA
907 SENSOR
908 MICROPHONE

917

909 INPUT DEVICE
911 SPEAKER
903 STORAGE
902 MEMORY
901 PROCESSOR

910 DISPLAY DEVICE
904 EXTERNAL CONNECTION I/F
919 AUXILIARY CONTROLLER
918 BATTERY

EP 3 249 840 B1

## FIG. 11

# FIG. 12

950

965

964

963

WIRELESS
COMMUNICATION
I/F

954

INPUT
DEVICE

951

CONTROLLER

952

MEMORY

955

DISPLAY
DEVICE

957

NETWORK
I/F

958

EP 3 249 840 B1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2011188338 A
- US 2011099446 A1
- EP 2640117 A1
- JP 2004260634 A
- JP 2014233012 A
- JP 2004178068 A